# EUROPÄISCHE PATENTSCHRIFT

(11) **EP 2 702 379 B1**
(45) Veröffentlichungstag und Bekanntmachung des Hinweises auf die Patenterteilung: **14.02.2018**
(21) Anmeldenummer: 12708307.9
(22) Anmeldetag: 08.03.2012
(51) Int. Cl.: G01L 23/22

(54) **VORRICHTUNG ZUR ERFASSUNG EINES DRUCKS, INSBESONDERE EINES BRENNRAUMDRUCKS EINER BRENNKRAFTMASCHINE**
APPARATUS FOR DETECTING A PRESSURE, IN PARTICULAR A COMBUSTION SPACE PRESSURE OF AN INTERNAL COMBUSTION ENGINE
DISPOSITIF POUR DÉTECTER UNE PRESSION, EN PARTICULIER UNE PRESSION DE CHAMBRE DE COMBUSTION D'UN MOTEUR À COMBUSTION INTERNE

(30) Priorität: 28.04.2011 DE 102011017667
(43) Veröffentlichungstag der Anmeldung: 05.03.2014
(73) Patentinhaber: Robert Bosch GmbH, 70442 Stuttgart (DE)
(72) Erfinder: GORZOLKA, Martin, 71729 Erdmannhausen (DE); WOLFF, Janpeter, 75449 Wurmberg (DE); SCHOLZEN, Holger, 70439 Stuttgart (DE)
(86) Internationale Anmeldenummer: PCT/EP2012/054012
(87) Internationale Veröffentlichungsnummer: WO 2012/146430

(56) Entgegenhaltungen:
- US-A1- 2010 294 028

## Beschreibung

Die Erfindung betrifft eine Vorrichtung zur Erfassung eines Drucks, insbesondere eines Brennraumdrucks einer Brennkraftmaschine nach den Merkmalen des Anspruchs 1.

### Stand der Technik

Vorrichtungen zur Erfassung des Brennraumdrucks einer Brennkraftmaschine sind bekannt, beispielsweise aus US2010/294028 und DE 10 2010 038 798. Dabei werden zwei

Ausführungsformen beschrieben, wobei die eine Ausführungsform eine Einzelvorrichtung zur Erfassung des Brennraumdrucks beschreibt, bei der in einem Gehäuse ein Sensormodul mit einem Sensorelement zur Druckerfassung angeordnet ist, wobei der Druck des Brennraums über eine Membran auf das Sensorelement übertragen wird. Die weitere Ausführungsform betrifft eine integrierte Lösung eines Sensormoduls mit einem Sensorelement zur Druckerfassung, bei der das Sensormodul in eine Glühstiftkerze integriert ist, wobei das Sensormodul mit einem Glühstift der Glühstiftkerze gekoppelt ist. Der Druck des Brennraums wird über den Glühstift auf das Sensorelement übertragen wird.

Aufgabe der vorliegenden Erfindung ist es, das Sensormodul so zu gestalten, dass die Vorrichtung zur Erfassung des Drucks einfacher und effizienter montierbar ist.

### Offenbarung der Erfindung

Mit der erfindungsgemäßen Vorrichtung mit den kennzeichnenden Merkmalen des Anspruchs 1 wird am vormontierten Sensormodul ein definierte Abstand und eine definierte Lage für die Anschlussleitungen geschaffen. Dadurch ist die Vorrichtung einfacher und effizienter montierbar.

Vorteilhafte Weiterbildungen der Erfindung sind durch die Maßnahmen der Unteransprüche möglich.

Eine zweckmäßige Ausführungsform wird dadurch geschaffen, wenn der Abschnitt senkrecht zur Längserstreckung des Sensormoduls einen größeren Querschnitt als der Querschnitt des Sensorelements aufweist und wenn die Abstützflächen an einer Außenfläche des Abschnitts angeordnet sind.

Die Anpassung der Anschlussleitungen in der radialen Anordnung an die Lage der Kontaktfahnen des Sensorelement ist dadurch in einfacher Weise erreichbar, indem die Außenfläche von einer zylindrische Umfangsfläche gebildet ist und indem die Abstützflächen an der zylindrischen Umfangsfläche ausgebildet sind. Schließlich bietet sich an, den Abschnitt mit einer kreisförmige Stirnfläche auszuführen, mit der sich das Abstützelement an einem gehäusefesten Fixierelement abstützt.

Zur Ausbildung der Abstützflächen an dem Abschnitt mit dem senkrecht zur Längserstreckung des Sensormoduls größeren Querschnitt ist vorgesehen, dass der Abschnitt in axialer Richtung des Sensormoduls beabstandet vom Sensorelement fixierelementseitig am Abstützelement ausgebildet ist, dass ein weiterer sensorelementseitiger Abschnitt am Abstützelement vorgesehen ist, und dass der Querschnitt des fixierelementseitigen Abschnitts in Längserstreckung des Sensormoduls größer ist als der Querschnitt des sensorelementseitigen Abschnitts in derselben Richtung. Dadurch wird in einem axialen Abstand zu den Kontaktfahnen des Sensorelements ein definierter radialer Abstand für eine weitere sichere Lageorientierung für die Anschlussleitungen ausgebildet, wobei der definierte Abstand im Wesentlichen dem radialen Abstand der Kontaktfahnen des Sensorelements entspricht.

Als Keramikkörper lässt sich das Abstützelement einfach und vorteilhaft herstellen, wenn das Abstützelement zwischen dem brennraumseitigen Abschnitt und dem anschlussseitigen Abschnitt einen konischen Übergangsabschnitt aufweist.

Eine gute Handhabbarkeit des Sensormoduls bei der Montage der Vorrichtung ist dadurch möglich, wenn das Sensorelement und das Abstützelement mittels eines Schrumpfschlauchs fixiert und zentriert ist, wobei der Schrumpfschlauch zusätzlich die Anschlussleitungen gegen die Abstützflächen drückt, wodurch eine einfache Fixierung der Anschlussleitungen am Sensormodul erreicht wird. Die Anschlussleitungen sind zweckmäßigerweise als flache Stromschienen ausgeführt.

Das Sensormodul ist zwischen dem Kompensationskörper und einem Fixierelement mittels einer Vorspannkraft vorgespannt. Dazu ist das Fixierelement mittels eines hülsenförmigen Verbindungsteils fest mit dem Adapterelement verbunden.

Eine zusätzliche Führung in axialer Richtung außerhalb der Sensormoduls erhalten die Anschlussleitungen dadurch, indem das Fixierelement Aussparungen zur axialen Durchführung der Anschlussleitungen aufweist.

### Ausführungsbeispiel

Ein Ausführungsbeispiel der Erfindung ist in der Zeichnung dargestellt und in der nachfolgenden Beschreibung näher erläutert.

Es zeigen:
- Figur 1: eine Schnittdarstellung durch eine Vorrichtung zur Erfassung des Drucks in einem Brennraum einer Brennkraftmaschine,
- Figur 2: eine Schnittdarstellung durch ein Sensormodul der Vorrichtung gemäß Figur 1,
- Figur 3: eine Schnittdarstellung durch einen Teil des Sensormoduls in Figur 2,
- Figur 4: eine Schnittdarstellung nach der Linie IV-IV in Figur 3.

Die Vorrichtung zur Erfassung des Drucks in einem Brennraum einer Brennkraftmaschine weist mindestens ein Gehäuse 10 auf, in dem ein Sensormodul 12 angeordnet ist, welcher über einen Kraftpfad 14 mit dem Druck des Brennraums beaufschlagt wird.

Das Sensormodul 12 umfasst ein Sensorelement 20, an dem brennraumseitig ein Übertragungselement 21 und an der entgegengesetzten Seite ein Abstützelement 22 angesetzt ist. Das Sensorelement 20, das als piezoelektrischer Sensor ausgeführt ist, weist aus Fertigungsgründen rechtwinklig zur axialen Erstreckung des Sensormoduls 12 einen eckigen Querschnitt, vorzugsweise einen quadratischen Querschnitt auf. Das Sensorelement 20 besitzt Kontaktplättchen 38, die mit Kontaktfahnen 39.1 und 39.2 über den Querschnitt des Sensorelements 20 hervorstehen. Die Kontaktfahnen 39.1, 39.2 sind mit elektrischen Anschlussleitungen 50.1 und 50.2 kontaktiert, die beispielsweise als flache Stromschienen ausgeführt sind. Die Anschlussleitungen 50.1 und 50.2 führen in axialer Richtung zu nicht dargestellten Anschlusskontakten.

Der Kraftpfad 14 umfasst einen Druckaufnehmer 16, einen Kompensationskörper 25 zur Temperaturkompensation, ein Adapterelement 26, ein hülsenförmiges Verbindungsteil 27 und ein Fixierelement 28. Der Kompensationskörper 25 ist vorzugsweise rotationssymmetrisch ausgeführt.

Das Adapterelement 26 ist mit einem ersten Abschnittsteil 31, einem zweiten Abschnittsteil 32 und einen dazwischen im Wesentlichen radial verlaufenden biegeelastischen Steg 33 ausgeführt. Das Adapterelement 26 ist mit dem zweiten Abschnittsteil 32 fest am Gehäuse 10 verbunden. Die Verbindung des Adapterelements 26 mit dem Gehäuse 10 erfolgt dadurch, indem das zweite Abschnittsteil 32 fest mit der Innenwand des Gehäuses 10, beispielsweise mittels Schweißen verbunden wird. Das Adapterelement 26 ist weiterhin am ersten Abschnittsteil 31 brennraumseitig mit dem Druckaufnehmer 16 und an der dazu gegenüberliegenden Seite mit dem Kompensationskörper 25 verbunden. Dazu ist das erste Abschnittsteil 31 mit einer Aufnahme 35 ausgeführt, auf die der Druckaufnehmer 16 aufsitzt. An der gegenüberliegenden Seite weist das erste Abschnittsteil 31 eine Auflage 36 auf, auf die sich der Kompensationskörper 25 abstützt. Der axiale Abstand zwischen dem Kompensationskörper 25 und dem Fixierelement 28 wird mit dem hülsenförmigen Verbindungsteil 27 überbrückt, welches einerseits mit dem Adapterelement 26 und andererseits mit dem Fixierelement 28, z. B. mittels Schweißen verbunden ist.

Abgesehen von dem oben beschriebenen Kraftpfad 14, über welchen unmittelbar Kräfte, Bewegungen oder Drücke vom Druckaufnehmer 16 auf das Sensorelement 20 übertragen werden, sind auch Pfade durch das Gehäuse zu berücksichtigen. Da in den Übertragungspfaden unterschiedlichen Materialien aufgenommen sein können, welche unterschiedliche thermische Ausdehnungen aufweisen können, kann es bei den hohen Temperaturschwankungen, denen die Vorrichtung ausgesetzt sein kann, zu thermomechanischen Spannungen aufgrund dieser unterschiedlichen Ausdehnungen kommen. Diese thermomechanischen Spannungen können zu einer Verfälschung von Messergebnissen führen oder auch zu einer Beschädigung der Vorrichtung. Um dies zu vermeiden, ist dem Sensormodul 12 am Kraftpfad 14 der Kompensationskörper 25 vorgeschaltet. Der Kompensationskörper 25 kann beispielsweise eingerichtet sein durch eine geeignete Wahl seiner Länge und/oder seines Wärmeausdehnungskoeffizienten, so dass zumindest innerhalb typischer Temperaturbereiche, denen die Vorrichtung ausgesetzt werden kann, die Wärmeausdehnungen der unterschiedlichen Übertragungspfade zumindest weitgehend identisch sind.

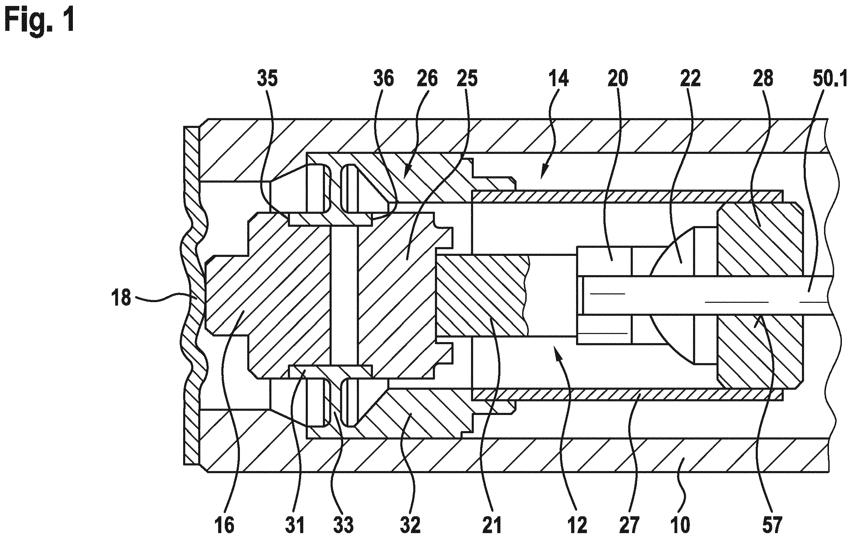

Der Druckaufnehmer 16 steht bei einer in Figur 1 gezeigten stand-alone-Vorrichtung zur Erfassung des Brennraumdrucks mit einer Membran 18 in Verbindung, die dem Brennraum ausgesetzt ist. Diese Vorrichtung dient einzig zur Erfassung des Brennraumdrucks einer Brennkraftmaschine. Bei einer weiteren, nicht gezeigten Ausführungsform wird der Druckaufnehmer 16 beispielsweise von einem Glührohr einer Glühstiftkerze gebildet, die dem Brennraum der Brennkraftmaschine ausgesetzt ist.

Das Sensormodul 12 ist zwischen dem Kompensationskörper 25 und dem Fixierelement 28 mittels einer Vorspannung eingesetzt. Dazu stützt sich das Übertragungselement 21, das aus einem keramischen Material ausgeführt ist, druckaufnehmerseitig auf dem Kompensationskörper 25 ab. Fixierelementseitig stützt sich das Sensormodul 12 mittels des Abstützelements 22, das ebenfalls aus Keramischen Material ausgeführt ist, am Fixierelement 28 ab.

Zur besseren Kraftübertragung und Kraftverteilung sind die an das eckig ausgeführte Sensorelement 20 angrenzenden Bauteile mit dem Übertragungselement 21 und dem Abstützelement 22 zumindest an den Berührungsflächen mit dem Sensorelement 20 ebenfalls senkrecht zur axialen Erstreckung des Sensormoduls 12 mit einem eckigen Querschnitt ausgeführt, der im Wesentlichen an den senkrecht zur axialen Erstreckung des Sensormoduls 12 vorhandenen eckigen Querschnitt des Sensorelements 20 angepasst ist. Im vorliegenden Ausführungsbeispiel ist das Sensorelement 20 viereckig mit einem quadratischen Querschnitt ausgeführt. Das Übertragungselement 21 ist senkrecht zur axialen Erstreckung des Sensormoduls 12 angepasst an der Querschnitt des Sensorelements 20 ebenfalls viereckig mit einem quadratischen Querschnitt ausgeführt.

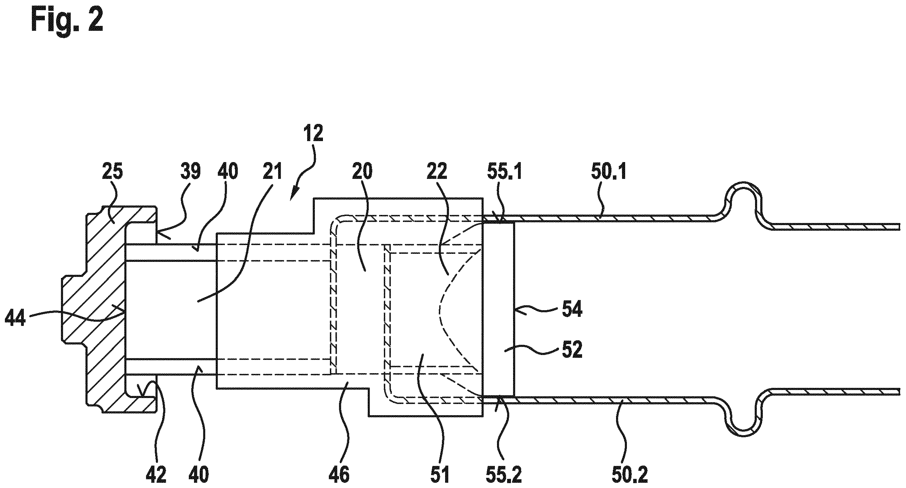

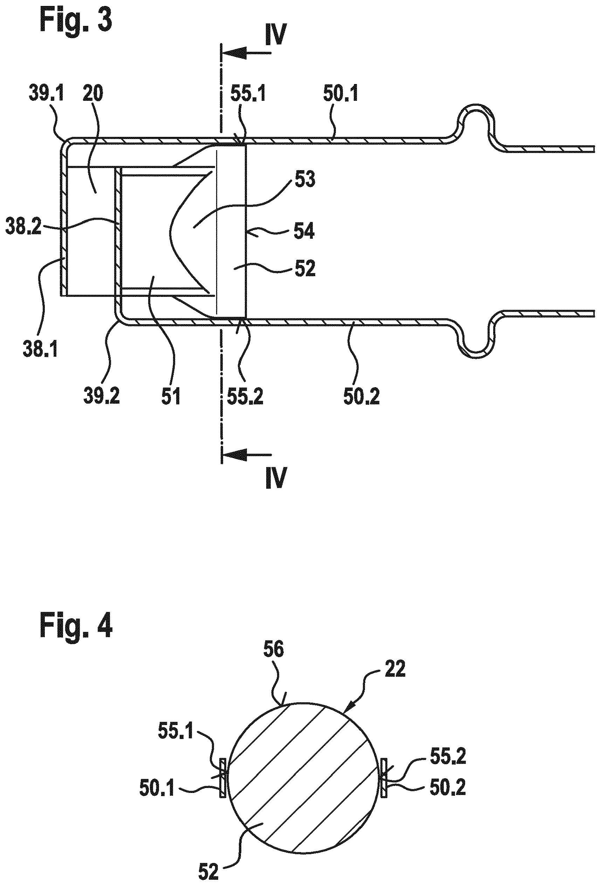

Gemäß Figur 2 ist zur koaxialen Ausrichtung von Kompensationskörper 25 und Sensormodul 12 der Kompensationskörper 25 an einer zum Sensormodul 12 weisenden Stirnseite 39 mit einer kreisförmigen Ausnehmung 42 versehen, in welcher das Übertragungselement 21 mit einer Stirnseite 44 aufgenommen ist. Dazu sind die vier Ecken des Übertragungselements 21 gemäß Figur 3 und 4 mit Abrundungen 40 versehen, die auf einem gemeinsamen virtuellen Abrundungskreis 41 liegen. Der Durchmesser der kreisförmigen Ausnehmung 42 ist dabei geringfügig größer als der Durchmesser des virtuellen Abrundungskreises 41 am Übertragungselement 41. Dadurch wird zwischen dem Abrundungskreis 41 und der kreisförmigen Ausnehmung 42 ein geringfügiges Spiel geschaffen, welches aus Montagegründen das Einführen des Übertragungselements 21 in die kreisförmige Ausnehmung 42 erleichtert. Durch die gewählte Form der Abrundungen 40 ist es möglich, das Übertragungselement 21 innerhalb des Kompensationskörpers 25 zu zentrieren. Dadurch liegt die kreisförmige Ausnehmung 42 des Kompensationskörpers 25 und der virtuelle Abrundungskreis 41 des Übertragungselements 21 axial auf einer gemeinsamen Mittellinie.

Das Abstützelement 22 weist angrenzende an das Sensorelement 20 sensorelementseitig einen quaderförmigen Abschnitt 51 auf, der senkrecht zur axialen Erstreckung des Sensormoduls 12 den an den Querschnitt des Sensorelements 20 angepassten quadratischen Querschnitt aufweist. An der gegenüberliegenden Seite weist das Abstützelement 22 einen fixierelementseitigen Abschnitt 52 mit einem senkrecht zur Erstreckung des Sensormoduls 20 größeren Querschnitt als der Querschnitt des erstens Abschnitts 51 auf. Im vorliegenden Ausführungsbeispiel ist der fixierelementseitige Abschnitt 52 zylindrisch mit einer Umfangsfläche 56 und einer kreisförmigen Stirnfläche 54 ausgeführt, wobei sich das Abstützelement 22 mit der kreisförmigen Stirnfläche 54 am Fixierelement 28 abstützt. Weiterhin ist der Übergang zwischen dem sensorelementseitigen Abschnitt 51 und dem fixierelementseitigen Abschnitt 52 mit einem konischen Übergangsabschnitt 53 ausgeführt. Dadurch überlagern sich der quaderförmige Abschnitt 51, der konische Übergangsabschnitt 53 und der zylindrische Abschnitt 52 wie in Figur 2 und 3 dargestellt.

Der fixierelementseitige Abschnitt 52 weist zwei Abstützflächen 55.1 und 55.2 auf, an welchen die beiden Anschlussleitungen 50.1 und 50.2 anliegen. Im vorliegenden Ausführungsbeispiel werden die zwei Abstützflächen 55.1 und 55.2 von zwei Stellen an der zylindrischen Umfangsfläche 56 gebildet. Die Abstützflächen 55.1, 55.2 bilden in einem axialen Abstand zu den Kontaktfahnen 39.1, 39.2 des Sensorelements 20 eine definierte radiale Lageorientierung für die Anschlussleitungen 50.1, 50.2 aus. Diese definierte radiale Lageorientierung durch die Abstützflächen 55.1 und 55.2 ist im Wesentlichen durch die radiale Lageorientierung der Kontaktfahnen 39.1, 39.2 vorgegeben.

Das Sensormodul 12 ist weiterhin von einem Schrumpfschlauch 46 umgeben, mit dem während des Montageprozesses die Bauteile des Sensormoduls 12 fixiert sind. Nach dem Umschrumpfen des Sensormoduls 12 mit dem Schrumpfschlauch 46 übernimmt dieser die Fixierung und damit die Zentrierung des Übertragungselements 21, des Sensorelements 20 und des Abstützelements 22 innerhalb des Sensormoduls 12. Der Schrumpfschlauch 46 übernimmt neben der Fixierung und Zentrierung der Bauteile des Sensormoduls 12 zusätzlich eine Arretierung der Anschlussleitungen 50.1 und 50.2 an den Abstützflächen 55.1 und 55.2, indem die Anschlussleitungen 50.1 und 50.2 an die zylindrische Umfangsfläche 56 gedrückt werden.

Durch die Anlage der beiden Anschlussleitungen 50.1 und 50.2 an dem größeren Querschnitt des fixierelementseitigen Abschnitt 52 wird für beide Anschlussleitungen 50.1 und 50.2 ein definierte Abstand und eine definierte Lage am vormontierten Sensormodul 12 geschaffen, wobei die definierte Lage durch den Schrumpfschlauch 56 zusätzlich eine Fixierung erhält.

## Patentansprüche

1. Vorrichtung zur Erfassung eines Drucks, insbesondere in einem Brennraum einer Brennkraftmaschine mit mindestens einem Gehäuse (10), einem im Gehäuse (10) angeordneten Sensormodul (12) und einem im Gehäuse (10) befestigten Adapterelement (26), wobei das Sensormodul (12) mindestens ein Sensorelement (20) und eine Abstützelement (22) umfasst, und wobei das Sensorelement (20) mit Anschlussleitungen (50.1, 50.2) elektrisch kontaktiert ist, die sich im Wesentlichen in axialer Richtung des Sensormoduls (12) erstrecken, **dadurch gekennzeichnet, dass** das Abstützelement (22) einen Abschnitt (52) aufweist, an welchem Abstützflächen (55.1, 55.2) für die Anschlussleitungen (50.1 und 50.2) ausgebildet sind, wobei das Sensorelement (20) und das Abstützelement (22) mittels eines Schrumpfschlauchs (46) fixiert ist, derart, dass der Schrumpfschlauch (46) die Anschlussleitungen (50.1, 50.2) gegen die Abstützflächen (55.1, 55.2) drückt.

2. Vorrichtung nach Anspruch 1, **dadurch gekennzeichnet, dass** der Abschnitt (52) senkrecht zur Längserstreckung des Sensormoduls (12) einen größeren Querschnitt als der Querschnitt des Sensorelements (20) aufweist, und dass die Abstützflächen (55.1, 55.2) an einer Außenfläche (56) des Abschnitts (52) angeordnet sind.

3. Vorrichtung nach Anspruch 2, **dadurch gekennzeichnet, dass** die Außenfläche (56) von einer zylindrische Umfangsfläche des Abschnitts (52) gebildet ist und dass die Abstützflächen (55.1, 55.2) an der zylindrischen Umfangsfläche (56) ausgebildet sind.

4. Vorrichtung nach Anspruch 2, **dadurch gekennzeichnet, dass** der größere Querschnitt des Abschnitts (52) fixierelementseitig eine kreisförmige Stirnfläche (54) aufweist, mit der sich das Abstützelement (22) abstützt.

5. Vorrichtung nach einem der Ansprüche 1 bis 4, **dadurch gekennzeichnet, dass** der Abschnitt (52) in axialer Richtung beabstandet vom Sensorelement (20) fixierelementseitig am Abstützelement (22) ausgebildet ist, dass am Abstützelement (22) ein weiterer sensorelementseitiger Abschnitt (51) vorgesehen ist, und dass senkrecht zur axialen Erstreckung des Sensormoduls (12) der Querschnitt des fixierelementseitigen Abschnitts (52) größer ist als der Querschnitt des sensorelementseitigen Abschnitts (51).

6. Vorrichtung nach Anspruch 5, **dadurch gekennzeichnet, dass** das Abstützelement (22) zwischen dem anschlussseitigen Abschnitt (51) und dem brennraumseitigen Abschnitt (52) einen konischen Übergangsabschnitt (53) aufweist.

7. Vorrichtung nach Anspruch 1, **dadurch gekennzeichnet, dass** Anschlussleitungen (50.1 und 50.2) als Stromschienen ausgeführt sind.

8. Vorrichtung nach Anspruch 1, **dadurch gekennzeichnet, dass** das Sensormodul (12) zwischen einem Kompensationskörper (25) und einem Fixierelement (28) mittels einer Vorspannkraft vorgespannt ist, und dass das Fixierelement (28) mittels eines hülsenförmigen Verbindungsteils (27) fest mit dem Adapterelement (26) verbunden ist.

9. Vorrichtung nach Anspruch 8, **dadurch gekennzeichnet, dass** das Fixierelement (28) Aussparungen (57) zur axialen Durchführung der Anschlussleitungen (50.1 und 50.2) aufweist.

## Claims

1. Apparatus for detecting a pressure, in particular in a combustion chamber of an internal combustion engine, having at least one housing (10), a sensor module (12) arranged in the housing (10) and an adapter element (26) fixed in the housing (10), the sensor module (12) comprising at least one sensor element (20) and a supporting element (22), and electric contact being made with the sensor element (20) by connecting leads (50.1, 50.2), which extend substantially in the axial direction of the sensor module (12), **characterized in that** the supporting element (22) has a section (52) on which supporting surfaces (55.1, 55.2) for the connecting leads (50.1 and 50.2) are formed, the sensor element (20) and the supporting element (22) being fixed by means of a heat-shrink sleeve (46), in such a way that the heat-shrink sleeve (46) presses the connecting leads (50.1, 50.2) against the supporting surfaces (55.1, 55.2).

2. Apparatus according to Claim 1, **characterized in that** the section (52) at right angles to the longitudinal extent of the sensor module (12) has a larger cross section than the cross section of the sensor element (20), and **in that** the supporting surfaces (55.1, 55.2) are arranged on an outer surface (56) of the section (52).

3. Apparatus according to Claim 2, **characterized in that** the outer surface (56) is formed by a cylindrical circumferential surface of the section (52), and **in that** the supporting surfaces (55.1, 55.2) are formed on the cylindrical circumferential surface (56).

4. Apparatus according to Claim 2, **characterized in that** the larger cross section of the section (52) on the fixing element side has a circular end face (54), by which the supporting element (22) is supported.

5. Apparatus according to one of Claims 1 to 4, **characterized in that**, in the axial direction, the section (52) is formed on the fixing element side on the supporting element (22) at a distance from the sensor element (20), **in that** a further section (51) on the sensor element side is provided on the section (22), and **in that**, at right angles to the axial extent of the sensor module (12), the cross section of the section (52) on the fixing element side is larger than the cross section of the section (51) on the sensor element side.

6. Apparatus according to Claim 5, **characterized in that** the supporting element (22) has a conical transition section (53) between the section (51) on the connection side and the section (52) on the combustion chamber side.

7. Apparatus according to Claim 1, **characterized in that** connecting leads (50.1 and 50.2) are embodied as bus bars.

8. Apparatus according to Claim 1, **characterized in that** the sensor module (12) is preloaded between a compensation body (25) and a fixing element (28) by means of a preloading force, and **in that** the fixing element (28) is firmly connected to the adapter element (26) by means of a sleeve-like connecting part (27).

9. Apparatus according to Claim 8, **characterized in that** the fixing element (28) has cut-outs (57) for the connecting leads (50.1 and 50.2) to be led axially through.

## Revendications

1. Dispositif pour détecter une pression, en particulier dans une chambre de combustion d'un moteur à combustion interne avec au moins un corps (10), un module de détecteur (12) disposé dans le corps (10) et un élément d'adaptateur (26) fixé dans le corps (10), dans lequel le module de détecteur (12) comprend au moins un élément de détecteur (20) et un élément de support (22), et dans lequel l'élément de détecteur (20) peut être mis en contact électrique avec des lignes de raccordement (50.1, 50.2), qui s'étendent essentiellement dans la direction axiale du module de détecteur (12), **caractérisé en ce que** l'élément de support (22) présente une partie (52), sur laquelle sont formées des faces de support (55.1, 55.2) pour les lignes de raccordement (50.1, 50.2), dans lequel l'élément de détecteur (20) et l'élément de support (22) sont fixés au moyen d'un tuyau souple rétractable (46), de telle manière que le tuyau souple rétractable (46) presse les lignes de raccordement (50.1, 50.2) contre les faces de support (55.1, 55.2).

2. Dispositif selon la revendication 1, **caractérisé en ce que** la partie (52) présente perpendiculairement à l'extension longitudinale du module de détecteur (12) une section transversale plus grande que la section transversale de l'élément de détecteur (20), et **en ce que** les faces de support (55.1, 55.2) sont disposées sur une face extérieure (56) de la partie (52).

3. Dispositif selon la revendication 2, **caractérisé en ce que** la face extérieure (56) est formée par une surface périphérique cylindrique de la partie (52) et **en ce que** les faces de support (55.1, 55.2) sont formées sur la surface périphérique cylindrique (56).

4. Dispositif selon la revendication 2, **caractérisé en ce que** la plus grande section transversale de la partie (52) présente du côté de l'élément de fixation une face frontale circulaire (54), par laquelle l'élément de support (22) s'appuie.

5. Dispositif selon l'une quelconque des revendications 1 à 4, **caractérisé en ce que** la partie (52) est formée sur l'élément de support (22) du côté de l'élément de fixation à distance de l'élément de détecteur (20) en direction axiale, **en ce qu'**il est prévu sur l'élément de support (22) une autre partie (51) du côté de l'élément de détecteur, et **en ce que** la section transversale de la partie (52) du côté de l'élément de fixation perpendiculairement à l'extension axiale du module de détecteur (12) est plus grande que la section transversale de la partie (51) du côté de l'élément de détecteur.

6. Dispositif selon la revendication 5, **caractérisé en ce que** l'élément de support (22) présente une partie de transition conique (53) entre la partie (51) du côté du raccord et la partie (52) du côté de la chambre de combustion.

7. Dispositif selon la revendication 1, **caractérisé en ce que** les lignes de raccordement (50.1, 50.2) sont constituées par des barres conductrices.

8. Dispositif selon la revendication 1, **caractérisé en ce que** le module de détecteur (12) est précontraint par une force de précontrainte entre un corps de compensation (25) et un élément de fixation (28), et **en ce que** l'élément de fixation (28) est fermement assemblé à l'élément d'adaptateur (26) au moyen d'une pièce de liaison en forme de douille (27).

9. Dispositif selon la revendication 8, **caractérisé en ce que** l'élément de fixation (28) présente des découpes (57) pour la traversée axiale des lignes de raccordement (50.1 et 50.2).
